# FASCICULE DE BREVET EUROPEEN

(11) **EP 0 686 246 B1**
(45) Date de publication et mention de la délivrance du brevet: **21.04.1999**
(21) Numéro de dépôt: 94907592.3
(22) Date de dépôt: 17.02.1994
(51) Int. Cl.: F16L 58/04, C23C 4/18, C23C 28/00

(54) **ELEMENT DE TUYAUTERIE POUR CANALISATION ENTERREE, CANALISATION ENTERREE CORRESPONDANTE, ET PROCEDE DE FABRICATION D'UN TEL ELEMENT DE TUYAUTERIE**
ROHRELEMENT FÜR ERDVERLEGTE ROHRLEITUNG, ENTSPRECHENDE ERDVERLEGTE ROHRLEITUNG UND HERSTELLUNGSVERFAHREN EINES SOLCHEN ROHRELEMENTES
PIPING ELEMENT FOR BURRIED CONDUIT, CORRESPONDING BURRIED CONDUIT, AND METHOD FOR MANUFACTURING SAID PIPING ELEMENT

(30) Priorité: 18.02.1993 FR 9301862
(43) Date de publication de la demande: 13.12.1995
(73) Titulaire: PONT-A-MOUSSON S.A., 54000 Nancy (FR)
(72) Inventeur: PEDEUTOUR, Jean-Marc, F-54700 Blénod-lès-Pont-à-Mousson (FR); NOUAIL, Gérard, F-57000 Metz (FR); BELLO, Jean, F-54380 Gézoncourt (FR)
(74) Mandataire: Puit, Thierry
(86) Numéro de dépôt international: FR9400181
(87) Numéro de publication internationale: WO9419640

(56) Documents cités:
- EP-A- 0 151 064
- EP-A- 0 209 143
- EP-A- 0 485 972
- EP-A- 0 508 207
- GB-A- 2 117 414
- US-A- 5 126 210
- PATENT ABSTRACTS OF JAPAN vol. 15, no. 100 (C-0813)1990 & JP,A,23 010 357 (MATSUSHITA ELECTRIC)
- DATABASE WPI Week 7721, Derwent Publications Ltd., London, GB; AN 77-36900 & JP,A,52 045 552 (OSAKA GAS) 11 Avril 1977
- DATABASE WPI Week 8850, Derwent Publications Ltd., London, GB; AN 88-356266 & JP,A,63 265 627 (SUMITOMO METAL) 2 Novembre 1988

## Description

La présente invention est relative aux canalisations enterrées constituées d'éléments de tuyauterie à base de fer, notamment en fonte. Par "éléments de tuyauterie", on entend les tuyaux ainsi que les divers accessoires tels que les coudes, les raccords etc. Par le document JP-A-23010357 on connaît un procédé de fabrication de revêtement de tube d'acier. Ce document envisage un dépôt par pulvérisation d'un alliage zinc/aluminium sacrificiel, suivi du dépôt d'une résine époxy. Il semble que la couche de résine doive être étanche.

Ce procédé s'applique aux revêtements de tubes d'un "espace de séchage", et donc certainement de tubes aériens, constitués de fer ou d'acier.

La corrosion par les sols des métaux ferreux est un phénomène d'une nature différente de la corrosion atmosphérique et consiste, pour l'essentiel, en la création de zones d'oxydation électriquement associées à des zones de réduction pouvant être situées à une certaine distance. En conséquence, il se produit des détériorations localisées et par conséquent importantes du métal ferreux.

La protection anticorrosion des éléments de tuyauterie enterrés présente ainsi une difficulté particulière, d'autant plus que les terrains sont hétérogènes et de natures très diverses, que les éléments de tuyauterie, suivant leur utilisation, véhiculent des fluides à des températures différentes, modifiant les conditions de corrosion, et que la manutention des éléments de tuyauteries destinées à être enterrées conduit fréquemment à blesser en divers emplacements leur surface extérieure.

L'invention a pour but de fournir une technique de revêtement d'un élément de tuyauterie enterrée à base de fer qui, avec un coût acceptable, convienne quelle que soit la destination de la canalisation, notamment en adduction d'eau et en assainissement, et dans la grande majorité des terrains.

A cet effet, l'invention a pour objet un élément de tuyauterie à base de fer, notamment en fonte, pour canalisation enterrée, pourvu d'un revêtement extérieur comprenant :
- une première couche poreuse, d'alliage zinc/aluminium contenant 5 à 60% d'aluminium ; et, sur cette première couche,
- une seconde couche poreuse, dite bouche-pores, à base de liant organique ou minéral, en phase aqueuse, solvant ou poudre, d'une épaisseur comprise entre 100 et 140 µm.

Suivant d'autres caractéristiques préférentielles :
- le liant organique est un vernis de bitume, un brai de houille ou un produit de synthèse organique ;
- le produit de synthèse organique est une résine époxydique ;
- la couche bouche-pores est une peinture à l'eau ;
- la couche d'alliage est prévue dans une quantité d'au moins 200 g/m² ;
- le revêtement comporte en outre une couche de chromate de zinc et/ou de phosphate de zinc entre lesdites première et secondes couches.

L'invention a également pour objets :
- une canalisation enterrée constituée d'éléments de tuyauterie tels que définis ci-dessus ;
- un procédé de fabrication d'un élément de tuyauterie, comprenant au moins les étapes suivantes :
   (a) dépôt par métallisation à l'arc une première couche d'alliage zinc/aluminium, contenant 5 à 60 % d'aluminium ; puis
   (b) dépôt d'une seconde couche poreuse, dite bouche-pores, à base de liant organique ou minéral, en phase aqueuse, solvant ou poudre, d'une épaisseur comprise entre 100 et 140 µm,
pour la protection contre la corrosion par les sols dudit élément de tuyauterie à base de fer, notamment en fonte ;

On fournira maintenant un exemple de mise en oeuvre de l'invention, appliqué à un élément de tuyauterie d'adduction d'eau ou d'assainissement en fonte ductile.

Dans cet exemple, le revêtement défini plus haut est appliqué sur de la fonte prise après passage au four de traitement thermique, donc possédant une peau constituée d'oxydes de fer.

Dans une première étape, on dépose par métallisation à l'arc électrique une première couche d'alliage zinc/aluminium contenant 5 à 60% d'aluminium, et de préférence 10 à 60% d'aluminium.

Sous l'action des agents corrosifs du sol, cette couche se transforme en une couche protectrice de produits de corrosion stable dans le milieu où elle a pris naissance. La couche d'alliage est par ailleurs dite "sacrificielle" par rapport à la fonte, en ce sens qu'elle peut se consommer progressivement par oxydation sous l'effet de la pile électrochimique formée par la fonte, l'alliage et le sol, pour protéger la fonte sous-jacente ou mise à nu au niveau de défauts de la couche d'alliage zinc-aluminium, par formation de ladite couche protectrice.

Du fait de son dépôt par métallisation à l'arc, cette première couche est constituée de gouttelettes solidifiées et est donc poreuse, et, par un choix approprié de la taille des pores et de l'épaisseur de la couche, on peut régler les conditions, notamment la vitesse, de formation de la couche protectrice. On a constaté que la structure biphasique de l'alliage zinc/aluminium favorise le piégeage des produits de corrosion du zinc.

On a ainsi déterminé que la première couche de revêtement devait de préférence être déposée dans une quantité d'au moins 200 g/m².

On dépose ensuite, par pulvérisation, la couche de finition dite bouche-pores. Ce bouche-pores permet d'une part de ralentir la corrosion du zinc, et d'autre part, de consolider la couche de produits de corrosion du zinc, afin de maintenir leur effet protecteur. L'épaisseur du bouche-pores doit être suffisante pour assurer cette retenue, mais suffisamment faible pour que le bouche-pores reste poreux, faute de quoi les espèces actives ne pourraient plus migrer jusqu'à la première couche du revêtement pour que celle-ci joue son rôle, expliqué ci-dessus. De plus, une épaisseur trop importante du bouche-pores conduirait au piégeage d'eau sous lui et à la formation de cloques.

On a ainsi déterminé que l'épaisseur du bouche-pores devrait être comprise entre 100 et 140 µm.

Le bouche-pores est à base de liant organique ou minéral, en phase aqueuse, solvant ou poudre, le liant organique pouvant être un vernis de bitume, un brai de houille ou un produit de synthèse organique. Dans ce dernier cas, on choisit de préférence une résine époxydique. En variante, la couche bouche-pores est une peinture à l'eau.

Eventuellement, on procède, après le dépôt de la première couche et avant celui de la seconde couche, à un traitement de conversion de surface de l'alliage zinc/aluminium, consistant en une chromatation ou en une phosphatation. Ce traitement consiste en l'application sur la couche d'alliage zinc/aluminium d'un produit mono ou bi-composant à base chromatante et/ou phosphatante.

A titre d'exemple, on a revêtu un tuyau en fonte, pris après passage au four de traitement thermique, de la manière suivante :
- dépôt par métallisation à l'arc électrique, à raison de 200 g/m², d'une couche d'alliage Zn/Al à 85% de zinc et 15% d'aluminium ; puis
- dépôt au pistolet à peinture, fonctionnant sans air ou à l'air comprimé, d'un produit de conversion de surface composé essentiellement de chromate de zinc, de butyral polyvinylique et d'acide phosphorique, sous une épaisseur à sec de 15 µm ; puis
- dépôt au pistolet à peinture, fonctionnant sans air ou à l'air comprimé, d'une résine époxy, constituant la couche bouche-pores, sous une épaisseur à sec de 120 µm.

## Revendications

1. Elément de tuyauterie à base de fer, notamment en fonte, pour canalisation enterrée, pourvu d'un revêtement extérieur comprenant :
- une première couche, poreuse, d'alliage zinc/aluminium contenant 5 à 60 % d'aluminium ; et sur cette première couche,
- une seconde couche poreuse, dite bouche-pores, à base de liant organique ou minéral, en phase aqueuse, solvant ou poudre, d'une épaisseur comprise entre 100 et 140 µm.

2. Elément de tuyauterie selon la revendication 1, caractérisé en ce que le liant organique est un vernis de bitume, un brai de houille ou un produit de synthèse organique.

3. Elément de tuyauterie selon la revendication 2, caractérisé en ce que le produit de synthèse organique est une résine époxydique.

4. Elément de tuyauterie selon la revendication 1, caractérisé en ce que la couche bouche-pores est une peinture à l'eau.

5. Elément de tuyauterie selon la revendication 1, caractérisé en ce que la couche d'alliage est prévue dans une quantité d'au moins 200g/m².

6. Elément de tuyauterie selon l'une quelconque des revendications 1 à 5, caractérisé en ce que le revêtement comporte en outre une couche de chromate de zinc et/ou de phosphate de zinc entre lesdites première et seconde couches.

7. Canalisation enterrée constituée d'éléments de tuyauterie suivant l'une quelconque des revendications 1 à 6.

8. Procédé de fabrication d'un élément de tuyauterie conforme à celui de l'une quelconque des revendications 1 à 6, comprenant au moins les étapes suivantes :
(a) dépôt par métallisation à l'arc d'une première couche d'alliage zinc/aluminium, contenant 5 à 60 % d'aluminium ; puis
(b) dépôt d'une seconde couche poreuse, dite bouche-pores, à base de liant organique ou minéral, en phase aqueuse, solvant ou poudre, d'une épaisseur comprise entre 100 et 140 µm,
pour la protection contre la corrosion par les sols dudit élément de tuyauterie à base de fer, notamment en fonte.

9. Procédé de fabrication selon la revendication 8, caractérisé en ce qu'on dépose la couche d'alliage dans une quantité d'au moins 200g/m².

10. Procédé suivant la revendication 9, caractérisé en ce qu'on dépose la seconde couche par pulvérisation.

11. Procédé selon la revendication 8, caractérisé en ce qu'il comprend, entre les étapes (a) et (b), une étape de conversion de surface par chromatation et/ou phosphatation.

## Patentansprüche

1. Rohrelement auf Eisenbasis, insbesondere aus Gußeisen für eine erdverlegte Rohrleitung, das mit einem äußeren Überzug versehen ist, der:
- eine erste, poröse Zink/Aluminium-Legierungsschicht, die 5 bis 60 % Aluminium enthält, und auf dieser ersten Schicht
- eine zweite, poröse, Porenfüller genannte Schicht auf Basis von organischem oder mineralischem Bindemittel als wässerige Phase, Lösungsmittel oder Pulver mit einer Dicke im Bereich von 100 bis 140 µm aufweist.

2. Rohrelement nach dem Anspruch 1,
**dadurch gekennzeichnet,** daß
das organische Bindemittel ein Bitumenlack, ein Steinkohlenpech oder ein organisches Syntheseprodukt ist.

3. Rohrelement nach dem Anspruch 2,
**dadurch gekennzeichnet,** daß das organische Syntheseprodukt ein Epoxidharz ist.

4. Rohrelement nach dem Anspruch 1,
**dadurch gekennzeichnet,** daß die Porenfüllerschicht eine Wasserfarbe ist.

5. Rohrelement nach dem Anspruch 1,
**dadurch gekennzeichnet,** daß
die Legierungsschicht in einer Menge von wenigstens 200 g/m² vorgesehen ist.

6. Rohrelement nach irgendeinem der Ansprüche 1 bis 5,
**dadurch gekennzeichnet,** daß
der Überzug außerdem eine Zinkchromat- und/oder Zinkphosphatschicht zwischen der ersten und der zweiten Schicht aufweist.

7. Erdverlegte Rohrleitung, die aus Rohrelementen gemäß irgendeinem der Ansprüche 1 bis 6 gebildet ist.

8. Verfahren zur Herstellung eines Rohrelements gemäß dem nach irgendeinem der Ansprüche 1 bis 6, das wenigstens die folgenden Schritte:
(a) Abscheidung einer ersten Schicht aus Zink/Aluminium-Legierung, die 5 bis 60 % Aluminium enthält, durch Lichtbogenmetallisierung; danach
(b) Abscheidung einer zweiten, porösen, Porenfüller genannten Schicht auf Basis von organischem oder mineralischem Bindemittel als wässerige Phase, Lösungsmittel oder Pulver mit einer Dicke im Bereich von 100 bis 140 µm.
zum Schutz dieses Rohrelements auf Eisenbasis, insbesondere aus Gußeisen, gegen die Korrosion durch die Böden aufweist.

9. Herstellungsverfahren nach dem Anspruch 8,
**dadurch gekennzeichnet,** daß
man die Legierungsschicht in einer Menge von wenigstens 200 g/m² abscheidet.

10. Verfahren nach dem Anspruch 9,
**dadurch gekennzeichnet,** daß
man die zweite Schicht durch einen Spritzvorgang abscheidet.

11. Verfahren nach dem Anspruch 8,
**dadurch gekennzeichnet,** daß
es zwischen den Schritten (a) und (b) einen Schritt zur Oberflächenumwandlung durch Chromatisierung und/oder Phosphatierung aufweist.

## Claims

1. An iron-based, in particular cast iron, pipe member for buried piping, which is provided with an external coating comprising:
- a first porous layer of zinc/aluminium alloy containing 5 to 60% of aluminium; and on this first layer,
- a second porous layer, called the pore-sealing layer, based on organic or inorganic binder in aqueous, solvent or powder phase, between 100 and 140 µm thick.

2. A pipe member according to claim 1, characterised in that the organic binder is a bitumen varnish, a coal pitch or a synthetic organic product.

3. A pipe member according to claim 2, characterised in that the synthetic organic product is an epoxy resin.

4. A pipe member according to claim 1, characterised in that the pore-sealing layer is a water-based paint.

5. A pipe member according to claim 1, characterised in that the alloy layer is provided in an amount of at least 200 g/m².

6. A pipe member according to any one of claims 1 to 5, characterised in that the coating also incorporates a layer of zinc chromate and/or zinc phosphate between the said first and second layers.

7. Buried piping comprising pipe members according to any one of claims 1 to 6.

8. A method for producing a pipe member in accordance with that of any one of claims 1 to 6, comprising at least the following stages:
(a) deposition of a first layer of zinc/aluminium alloy containing 5 to 60% of aluminium by arc spraying; followed by
(b) deposition of a second porous layer, called the pore-sealing layer, based on organic or inorganic binder in aqueous, solvent or powder phase, between 100 and 140 µm thick, for the protection against corrosion by soil of the said iron-based, in particular cast iron, pipe member.

9. A production method according to claim 8, characterised in that the alloy layer is deposited in an amount of at least 200 g/m².

10. A method according to claim 9, characterised in that the second layer is deposited by spraying.

11. A method according to claim 8, characterised in that it comprises a stage of converting the surface by chromating and/or phosphating between stages (a) and (b).
